Europäisches Patentamt

**European Patent Office**

Office européen des brevets

(19)

(11) Veröffentlichungsnummer: **0 109 552**
A1

## (12) EUROPÄISCHE PATENTANMELDUNG

(21) Anmeldenummer: **83110429.4**

(22) Anmeldetag: **19.10.83**

(51) Int. Cl.³: **G 08 B 13/24**

(30) Priorität: **22.10.82 DE 3239173**

(43) Veröffentlichungstag der Anmeldung:
**30.05.84 Patentblatt 84/22**

(84) Benannte Vertragsstaaten:
**BE DE FR GB IT NL**

(71) Anmelder: **SIEMENS AKTIENGESELLSCHAFT
Berlin und München Wittelsbacherplatz 2
D-8000 München 2(DE)**

(72) Erfinder: **Ritter, Gerhard, Dipl.-Ing.
Mühlweg 1
D-8911 Thaining(DE)**

(72) Erfinder: **Freter, Walter, Ing. grad.
Kletterrosenweg 10
D-8000 München 45(DE)**

(72) Erfinder: **von Pieverling, Klaus, Dr.-Ing.
Remigerstrasse 1
D-8190 Wolfratshausen / Walram(DE)**

(54) Mikrowellen-Einbruchmeldesystem.

(57) Ein Mikrowellen-Einbruchmeldesystem für den Intrussionsschutz weist jeweils einen Streckenabschnitt mit einem Hohlleiter (HL) und daran angeschlossen einen Sender (SEN) und einen Empfänger (EMP) auf. An dem Hohlleiter (HL) ist in regelmäßigen Abständen über eine jeweilige Schaltvorrichtung (SV) eine Vielzahl von Strahlern (ST1 bis STn) angeschlossen, die zeitlich nacheinander an den Hohlleiter (HL) angekoppelt werden. Die vom jeweiligen Strahler (ST) ausgesandte Mikrowellenenergie wird teilweise reflektiert und empfangen. Im Empfänger (EMP) wird aus der Änderung des Reflexionssignals ein Alarmkriterium abgeleitet. Der Ankopplungszustand wird in bestimmten zeitlichen Abständen kurzzeitig unterbrochen, um bei nicht aktivierten Strahlern aus dem Empfangssignal ein Korrektursignal zu bilden.

FIG 1

EP 0 109 552 A1

0109552

SIEMENS AKTIENGESELLSCHAFT
Berlin und München

Unser Zeichen
VPA 82 P 1 9 5 9 E

## Mikrowellen-Einbruchmeldesystem

Die Erfindung bezieht sich auf ein Mikrowellen-Einbruchmeldesystem für den Intrusionsschutz.

Besonders schutzbedürftige Objekte, z.B. militärische Anlagen oder Kernkraftwerke, werden zusätzlich gesichert indem man die Umgebung derartiger Anlagen mit Schutzzäunen und mit elektronischen Überwachungseinrichtungen versieht. Zum Schutz eines größeren Areals mit elektronischen Mitteln werden vorwiegend zwei Systeme eingesetzt. Zum einen werden kapazitive Schutzzäune errichtet, bei denen sich das elektrische Feld bei Annäherung eines Eindringlings ändert, so daß daraus ein Alarm abgeleitet werden kann. Zum anderen werden Mikrowellenschranken verwendet, bei denen die Änderung des Übertragungsverhaltens einer Transmissionsstrecke beim Eindringen in den Transmissionsbereich verändert und daraus ein Alarm abgeleitet wird.

Sowohl der in seinem Aufbau sehr aufwendige kapazitive Schutzzaun als auch die Mikrowellenschranken weisen eine Reihe von Nachteilen auf. Der zu überwachende Systemabschnitt darf im allgemeinen eine maximale Länge von 100 Metern nicht überschreiten, da sonst der Eindringort nicht genau erkannt werden kann. Ferner weisen derartige Schutzeinrichtungen innerhalb des Systemabschnitts keine Entfernungsselektion auf. Auch das ungünstige Verhältnis zwischen den Meßsignalen und den sich über die Strecke des Systemabschnitts akumulierenden Störsignalen führt insbesondere durch Regen oder Schnee zu erheblichen Schwierigkeiten bei der Auswer-

En 1 Die / 14.10.1982

tung und geben daher oft Anlaß für Fehlmeldungen. Bei Schutzeinrichtungen mit Mikrowellenschranken sind zudem aufwendige Justiermaßnahmen erforderlich. Außerdem bringt die Aneinanderreihung mehrerer Schranken beim Schutz eines längeren Streckenabschnittes Interferenzprobleme mit sich.

Aufgabe der Erfindung ist es daher auf der Basis der Mikrowellentechnik ein Einbruchmeldesystem anzugeben, das weitgehend die oben beschriebenen Nachteile und die anhaftenden Mängel vermeidet. Dabei sollen längere Systemabschnitte überwacht werden können, wobei der Ort des Eindringens wesentlich genauer bestimmt werden kann.

Diese Aufgabe wird erfindungsgemäß mit einem Mikrowellen-Einbruchmeldesystem dadurch gelöst, daß jeweils ein Streckenabschnitt einen Hohlleiter und daran angeschlossen einen Sender und einen Empfänger aufweist und daß an dem Hohlleiter in regelmäßigen Abständen über eine jeweilige Schaltvorrichtung eine Vielzahl von Strahlern angeschlossen ist, die zyklisch an den Hohlleiter angekoppelt werden, wobei die vom jeweiligen Strahler ausgesandte Mikrowellenenergie teilweise reflektiert und im Empfänger aus der Änderung des Reflexionssignals ein Alarmkriterium abgeleitet wird.

Das Mikrowellen-Einbruchmeldesystem weist eine verhältnismäßig lange Hohlleiterstrecke auf, an die ein Sender und ein Empfänger angeschlossen ist. Der Mikrowellensender speist die Hohlleiterstrecke. In regelmäßigen Abständen, z.B. alle/zehn Meter, befindet sich eine Auskoppelstelle an die über einen Schalter ein Strahler angeschlossen ist. Die Strahler werden zeit-

C109552

lich nacheinander an die Hohlleiterstrecke angeschaltet. Der jeweils aktivierte Strahler beleuchtet eine zu überwachende Teilstrecke, z.B.  10 Meter, so daß der zu überwachende Bereich bis zum Wirkungsbereich des nächsten Strahlers ausgeleuchtet ist. So wird in rascher zeitlichen Reihenfolge jeweils eine Teilstrecke ausgeleuchtet, so/daß der gesamte Streckenabschnitt überwacht wird. Die Mikrowellenenergie wird teilweise reflektiert und läuft über den Strahler zurück in die Hohlleiterstrecke und dort zum Empfänger. Dringt eine Person in den vom Strahler ausgeleuchteten Bereich, so ändert sich das Reflexionssignal. Im Empfänger wird aus der Änderung des Reflexionssignals ein Alarmkriterium abgeleitet und ein Alarm angezeigt.

Das erfindungsgemäße Mikrowellen-Einbruchmeldesystem hat den Vorteil, daß/aufgrund der verhältnismäßig kurzen Teilstrecken nur geringe Störsignale, wie sie insbesondere bei Regen oder Schnee auftreten können, empfangen werden. Dadurch ergibt sich ein besseres Nutzsignal. Zudem kann ein langer Streckenabschnitt mit einem Sender und Empfänger vorgesehen werden, z.B. 500 Meter, weil der Eindringort aufgrund der Teilstrecken genau lokalisierbar ist.

Um systembedingte Störungen, wie sie aufgrund der Instabilität der Senderfrequenz oder der Übertragungsstrecke, beispielsweise durch Vibration des Hohlleiters, auftreten können, zu eliminieren, wird zweckmäßiger Weise der Ankopplungszyklus in bestimmten zeitlichen Abständen kurzzeitig unterbrochen. Sämtliche Störsignale, welche dann auftreten, wenn alle Strahler abgeschaltet sind, müssen auf derartige Instabilitäten zurückzuführen sein. Sie werden dadurch ausgeschaltet, daß das Empfangssignal bei nicht aktivierten Strahlern als Korrektursignal herangezogen wird. So kann beispielsweise der Meßwert dieses Empfangssignals auf Null gesetzt werden.

In einer bevorzugten Ausführungsform der Erfindung wird an einem Ende der Hohlleiterstrecke der Sender und am anderen Ende der Hohlleiterstrecke der Empfänger angeordnet. Im Empfänger wird das Summensignal aus der Speiseenergie und aus der reflektierten Strahlungsenergie ausgewertet und aus der Änderung des Summensignals ein Alarmkriterium abgeleitet. Diese Anordnung hat den Vorteil, daß eine verhältnismäßig lange Hohlleiterstrecke verwendet werden kann. Die Dämpfung des Hohlleiters wirkt sich nur in einer Richtung aus. Ferner ist bei dieser Anordnung keine sehr hohe Sendeleistung erforderlich, ebenso sind die Anforderungen an die Frequenzstabilität nicht so hoch.

Bei einer anderen Ausführungsform des erfindungsgemäßen Mikrowellen-Einbruchmeldesystem sind an ein und demselben Ende der Hohlleiterstrecke der Sender und der Empfänger, z.B. über einen Zirkulator, am Hohlleiter angeschlossen. Bei dieser Anordnung wird die Sendeenergie über den Zirkulator an den Hohlleiter gegeben und nacheinander in die einzelnen Strahler eingekoppelt. Das in den Strahler reflektierte Signal läuft durch die Hohlleiterstrecke zurück zum Zirkulator und von dort in den Empfänger. Im Empfänger wird ein Teil des Sendesignals, bedingt durch die nichtbeliebig hohe Zirkulatordämpfung, und das reflektierte Nutzsignal empfangen und aus der Änderung des reflektierten Nutzsignals ein Alarmkriterium abgeleitet. Diese Anordnung hat den Vorteil, daß der Sender und der Empfänger am gleichen Ort angebracht sind. Dabei lassen sich bei geeigneter Anpassung der Koppeldämpfung der einzelnen Strahler konstante Abstrahlverhältnisse im gesamten Streckenbereich erzielen.

In vorteilhafter Weise können für die ansteuerbaren Schaltvorrichtungen zur Auskoppelung der Sendeenergie an die Strahler Resonanzkreise vorgesehen werden. Diese Resonanzkreise sind verstimmbar und werden der Reihe nach so angesteuert, daß sie für die Zeit des Ankoppeln auf ihre Resonanzfrequenz abgestimmt sind. Dabei arbeitet der Sender mit einer konstanten Frequenz.

In einer Weiterbildung des erfindungsgemäßen Mikrowellen-Einbruchmeldesystem können die Schaltvorrichtungen von fest abgestimmten Resonanzkreisen gebildet sein. Dabei ist jeder Resonanzkreis auf eine andere Frequenz bzw. im Falle eines Bandpasses auf einen anderen Durchlaßbereich abgestimmt. Jeder Resonanzkreis ist zum nächsten Resonanzkreis um eine bestimmte Bandbreite verschoben, so daß der Sender, entsprechend der Summe der vorgegebenen Resonanzkreisbandbreiten die gesamte Frequenzbandbreite zyklisch durchläuft. Dies hat den Vorteil, daß für die jeweiligen Schaltvorrichtungen bzw. Resonanzkreise keine zusätzlichen Steuerleitungen vorgesehen werden müssen. Es ist jedoch ein Wobbelsender anzuordnen.

Anhand der Zeichnung wird die Erfindung an mehreren Ausführungsbeispielen im Einzelnen beschrieben und weitere Vorteile erläutert.

Dabei zeigen

Fig. 1 eine prinzipielle Anordnung des erfindungsgemäßen Mikrowellen-Einbruchmeldesystems,

Fig. 2 das Mikrowellen-Einbruchmeldesystem mit dem Sender und dem Empfänger an ein und demselben Ende des Hohlleiters,

Fig. 3 das Mikrowellen-Einbruchmeldesystem mit dem Sender an einem und mit dem Empfänger am anderen Ende des Hohlleiters,

Fig. 4 das Mikrowellen-Einbruchmeldesystem mit unterschiedlich abgestimmten Resonanzkreisen,

Fig. 5 den Frequenzverlauf des Wobbelsenders,

Fig. 6 ein Blockschaltbild des Empfängers,

Fig. 7a bis 7d Pulsdiagramme für den Empfänger,

Fig. 8 eine mögliche Anordnung des Hohlleiters und der Strahler am Schutzzaun in Seitenansicht und

Fig. 9 die Anordnung des Hohlleiters und des Strahlers am Schutzzaun in Draufsicht.

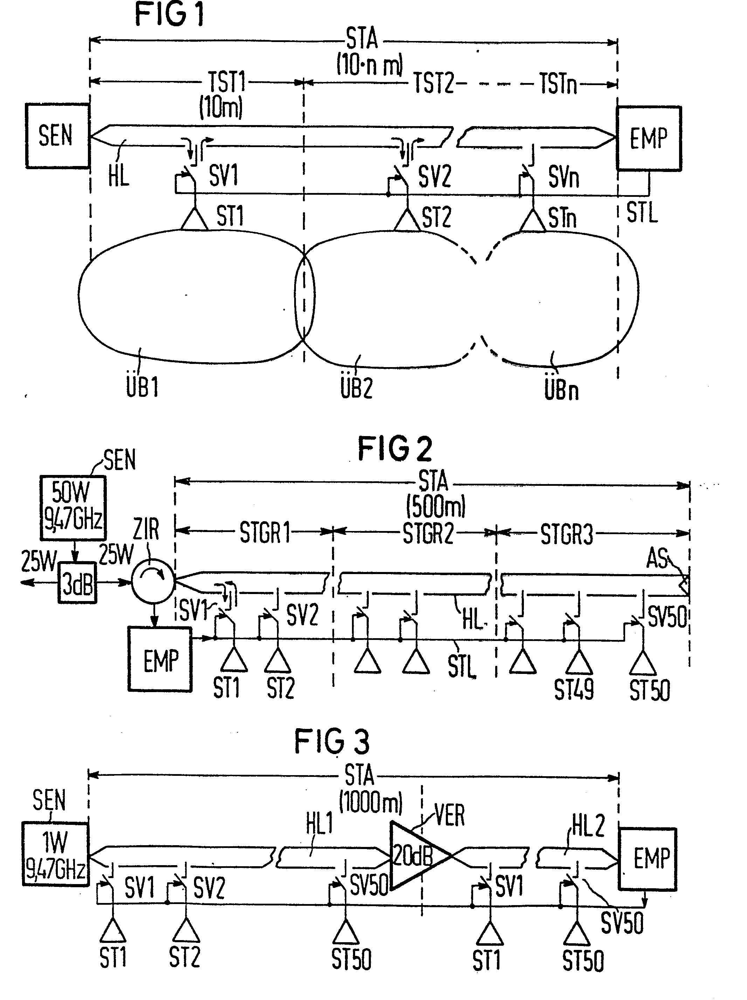

In Fig. 1 ist die prinzipielle Anordnung des erfindungsgemäßen Einbruchmeldesystems dargestellt. Ein Sendern SEN, z.B. ein Mikrowellen-Dauerstrichsender, speist den Hohlleiter HL mit einer konstanten Frequenz. Der Hohlleiter HL hat die Länge des zu überwachenden Streckenabschnitts STA, der beispielsweise 500 Meter betragen kann. Am anderen Ende des Hohlleiters HL ist der Empfänger EMP angeordnet. In regelmäßigen Abständen, z.B. 10 Meter, befindet sich am Hohlleiter HL eine Auskoppelstelle an der über eine Schaltvorrichtung SV jeweils ein Strahler ST1 bis STn angeschlossen ist. Die erste Auskoppelstelle SV1 ist beispielsweise 5 Meter vom Sender SEN entfernt und die letzte Auskoppelstelle SVn beispielsweise 5 Meter vom Empfänger EMP entfernt. Dadurch ergibt sich für jeden Strahler ST ein Überwachungsbereich ÜB, der eine Teilstrecke TST des gesamten Streckenabschnitts STA darstellt. Die Strahler ST1 bis STn werden zeitlich nacheinander, also zyklisch, an die Hohlleiterstrecke HL angeschaltet. Der jeweils aktivierte Strahler ST beleuchtet eine Teilstrecke TST, die beispielsweise 10 Meter betragen kann.

Die ausgekoppelte und vom Strahler ST ausgesandte Mikrowellenenergie wird teilweise reflektiert und läuft über den Strahler ST zurück in den Hohlleiter HL. An dem den Sender SEN gegenüber liegenden Ende des Hohlleiters HL wird die Summe aus der Speise- und der reflektierten Strahlungsenergie empfangen. Diese Energieanteile addieren bzw. subtrahieren sich je nach zugeordneter Phasenlage. Beim Eindringen in den Überwachungsbereich ÜB des aktivierten Strahlers ST ändert sich das Reflexionssignal und damit das am Empfänger EMP dedektierte Summensignal. Für die zyklische Auskoppelung der Mikrowellenenergie aus dem Hohlleiter HL werden der Reihe nach die einzelnen Schaltvorrichtungen SV1 bis SVn über die Steuerleitung STL angesteuert. Dies kann von einem im Empfänger EMP vorgesehenen Taktgenerator erfolgen.

Mit einer derartigen Anordnung kann man ein eng begrenztes Strahlungsfeld erzeugen, so daß aufgrund der relativ kurzen Teilstrecken nur kleine Störsignale aufgrund von Regen oder Schnee empfangen werden. Die kurzen Teilstrecken TST bewirken ein günstiges Verhältnis der Störenergie zur Meßenergie. Daraus ergibt sich ein weiterer Vorteil, nämlich der Ort des Eindringens kann wesentlich genauer lokalisiert werden, z.B. auf einen Teilabschnitt von 10 Metern, weil der zu überwachende Streckenabschnitt STA in eine Vielzahl (n) von kleinen Teilstrecken TST aufgeteilt ist. Ferner läßt sich der Sendestrahl parallel zum Schutzzaun sehr eng bündeln, so daß bei den üblichen Schutzzäunen, die aus einem Doppelzaun mit einem dazwischen befindlichen Schutzstreifen (sterile Zone) bestehen, die sterile Zone sehr schmal sein kann, z.B. 4 Meter. Eine derartige Anordnung läßt sich auch beliebig gut an das Schutzgelände anpassen. Mit einem Sender und mit einem Empfänger läßt sich ohne weiteres ein Streckenabschnitt von 500 Metern anordnen. Bei eventuellem Dazwischenschalten eines Verstärkers in die Hohlleiterstrecke, wie weiter unten noch ausgeführt wird, kann der Streckenabschnitt auf einen Kilometer ausgedehnt werden. Für
die Längen des zu überwachenden Streckenabschnitts ist
lediglich das Dämpfungsverhalten der Hohlleiterübertragungsstrecke ausschlaggebend.

In Fig. 2 ist das erfindungsgemäße Mikrowellen-Einbruchmeldesystem mit einem Sender SEN und einem Empfänger EMP an einem Ende des Hohlleiters HL dargestellt.
Der Sender SEN und der Empfänger EMP sind über einen
Zirkulator ZIR am Hohlleiter HL angeschlossen. Das andere Ende des Hohlleiters HL ist mit einem Hohlleiterabschluß AS versehen. Der zu überwachende Streckenabschnitt
STA kann dabei 500 Meter betragen. Der Sender SEN weist
in diesem Ausführungsbeispiel eine Leistung von 50 Watt
auf. Er arbeitet beispielsweise im X-Band. Bei dieser
Anordnung können mit einem Sender zwei Hohlleiterstrekken gespeist werden, so daß für eine Hohlleiterstrecke
HL 25 Watt Sendeleistung zur Verfügung stehen. Die Sendeenergie gelangt über den Zirkulator ZIR in den Hohlleiter HL und wird der Reihe nach über die ansteuerbaren
(STL) Schaltvorrichtungen SV1 bis SV50 an die Strahler ST1 bis ST50 ausgekoppelt. Das in dem Strahler ST
reflektierte Signal läuft zum Zirkulator ZIR zurück
und von dort in den Empfänger EMP.

Der Vorteil dieser Anordnung ist dadurch gegeben, daß
der Sender SEN und der Empfänger EMP am gleichen Ort
angeordnet sind und daß ein Sender gleichzeitig zwei
Streckenabschnitte STA speisen kann. Die höhere Sendeleistung ist notwendig, weil das Sendesignal beispielsweise bis zum letzten Strahler ST50 einmal die ganze
Hohlleiterstrecke HL zu durchlaufen hat und das reflektierte Signal die gesamte Hohlleiterstrecke HL erneut zu durchlaufen hat. Um ein konstantes Abstrahlverhältnis der einzelnen Strahler ST1 bis ST50 im gesamten Streckenabschnitt STA zu erreichen, ist die gesamte Überwachungsstrecke STA, hier im Ausführungsbeispiel in drei, Teilabschnitte, mit Strahlergruppen STGR bezeichnet, eingeteilt. Dabei weist die erste Strahlergruppe STGR1 eine Kopplungsdämpfung von beispielsweise 12dB, die zweite Strahlergruppe STGR2 eine Kopplungsdämpfung von 6dB und die dritte Strahlergruppe STGR3 eine Kopplungsdämpfung von 0dB auf. Die 50 Strahler ST1 bis ST50 werden der Reihe nach über die Schaltvorrichtungen SV1 bis SV50 angekoppelt, wobei die Steuerpulse für die Schaltvorrichtunge SV vom Empfänger EMP über die Steuerleitung STL an die Schaltvorrichtungen SV gelangen. Im Empfänger EMP wird das reflektierte Nutzsignal, zu dem sich noch ein Teil des Sendesignals, weil die Zirkulatordämpfung nicht beliebig groß sein kann, hinzu kommt, ausgewertet.

In Fig. 3 ist das Mikrowellen-Einbruchmeldesystem mit einem Sender SEN an einem Ende und mit einem Empfänger EMP am anderen Ende des Hohlleiters HL dargestellt. Dabei ist der Streckenabschnitt STA gegenüber der in Fig. 1 dargestellten Anordnung doppelt so groß (1000m), weil ein dazwischengeschalteten Streckenverstärker VER die vom Sender SEN kommende Energie und die von den Strahlern ST1 bis ST50 der ersten Hohlleiterstrecke HL1 reflektierte Energie verstärkt wird. Diese verstärkten Signale durchlaufen dann die zweite Hohlleiterstrecke HL2, an deren Ende die Summensignale empfangen (EMP) und ausgewertet werden, wie oben schon dargelegt. Diese Anordnung hat den Vorteil, daß der Sender SEN, der beispielsweise auf einerFrequenz von 9,47 GHz arbeitet, nur eine geringe Sendeleistung, beispielsweise 1 Watt benötigt. Ein weiterer Vorteil gegenüber der Anordnung gemäß Fig./besteht darin, daß keine so hohen Anforderungen an die Frequenzstabilität des Senders gestellt werden müssen.

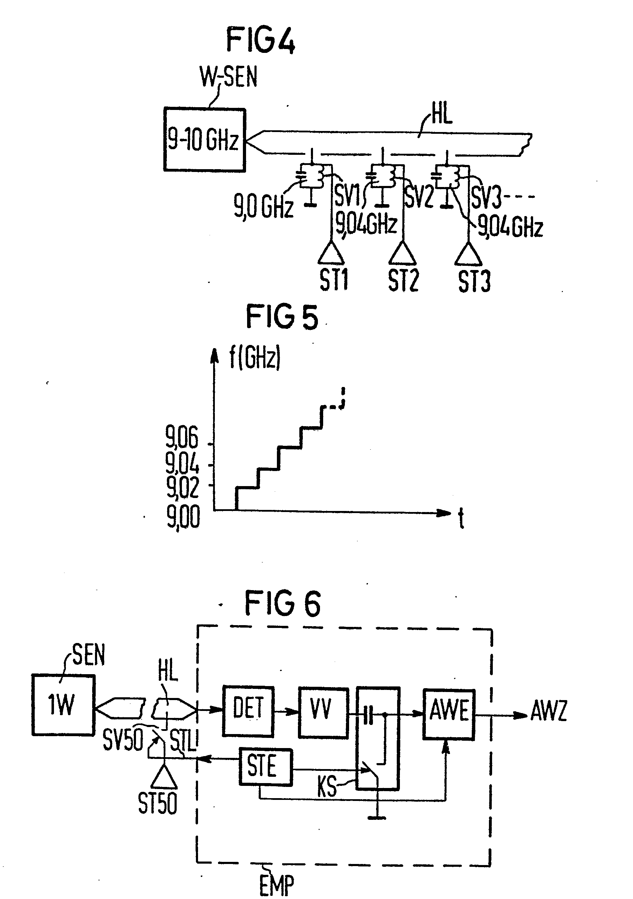

In Fig. 4 ist ein Wobbelsender W-SEN dargestellt, an dem die Hohlleiterstrecke HL angeschlossen ist. Die Schaltvorrichtungen SV an den Auskoppelstellen sind festaber unterschiedlich abgestimmte Resonanzkreise, die sich jeweils zum Vorhergehenden um eine bestimmte Kanalbreite in ihrer Resonanzfrequenz unterscheiden. Der Sender W-SEN, der beispielsweise einen Frequenzbereich von 9 bis 10 GHz zyklisch durchläuft, koppelt seine Sendeenergie in den Hohlleiter HL. Dort wird die Sendeenergie an der ersten Auskoppelstelle über den Resonanzkreis SV1 bei 9,00 GHz in den Strahler ST1 gekoppelt. Ist die Sendefrequenz um 10 MHz größer geworden, so wird die Mikrowellenenergie an der zweiten Auskoppelstelle über den Resonanzkreis VS1 bei 9,02 GHz in den zweiten Strahler ST2 gekoppelt. In Fig. 5 ist in Abhängigkeit der Zeit t die Frequenz f in GHz dargestellt. Dabei ergibt sich ein stufenförmiger Anstieg der Sendefrequenz von beispielsweise 9,0 GHz bis 10 GHz. Auf diese Weise wird ebenso wie bei den anderen Ausführungsbeispielen zyklisch, d.h. der Reihe nach jeder Strahler ST angekoppelt. Die reflektierte Sendeenergie wird wie oben schon erläutert, im Empfänger (EMP) ausgewertet.

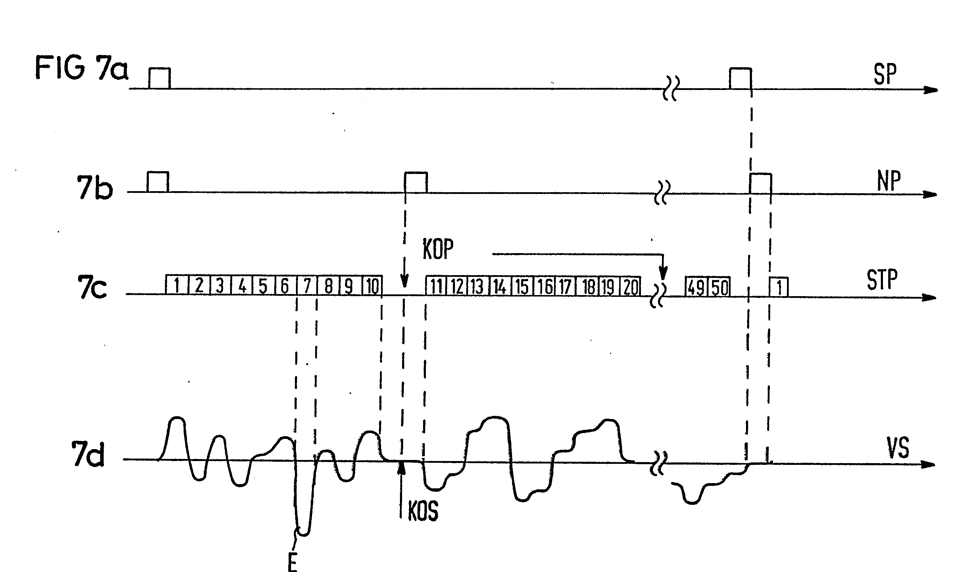

Eine mögliche Schaltungsanordnung des Empfängers EMP ist im Blockschaltbild der Fig. 6 dargestellt. Der Empfänger ist an dem einen Ende der Hohlleiterstrecke HL angeschlossen. Am anderen Ende der Hohlleiterstrecke HL sitzt der Sender SEN, der beispielsweise mit einer Leistung von 1 Watt arbeitet. Das Summensignal, bestehend aus Sendesignal und Signal der reflektierten Mikrowellenenergie, gelangt im Empfänger EMP an den Signaldetektor DET der die Schwebung auswertet. Entweder wird zwischen der durchgehenden Speisewelle und der Refle- xionsenergie, wie in Fig. 3 schon dargestellt, die Schwebung ausgewertet, oder aber es wird die Schwebung zwischen einem Teil des Sendesignals und der reflektierten Nutzenergie, wie in Fig. 2 schon erläutert, ausgewertet. Dem Signaldetektor/ist ein Videoverstärker VV und DET diesem eine Klemmschaltung KS nachgeordnet. Der Ausgang des Videoverstärkers VV führt auf eine Auswerteeinrichtung AWE, die aus den detektierten Signalen Alarmkriterien ableitet und entsprechende Alarme zur Anzeige ANZ bringt. Ferner ist in dem Empfänger EMP eine Taktsteuerung STE angeordnet, die über die Steuerleitung STL der Reihe nach die einzelnen Schaltvorrichtungen SV ansteuert. Ferner beaufschlagt die Taktsteuereinrichtung STE auch die Klemmschaltung KS und die Auswerteeinrichtung AWE. Mit der Klemmschaltung KS sollen Störungen eliminiert werden, die auf Instabilitäten der Sendefrequenzerzeugung sowie der Übertragungsstrecke, beispielsweise Vibration des Hohlleiters, zurückzuführen sind. Sämtliche Störsignale, welche dann auftreten, wenn alle Strahler abgeschaltet sind, müssen auf derartige Instabilitäten zurückzuführen sein. Diese systembedingten Störungen werden dadurch unterdrückt, daß der Meßwert bei nicht aktivierten Strahlern am Empfänger für Null erklärt wird. Um diese periodischen Korrekturvorgänge ausreichend schnell durchführen zu können, wird nach der Aktivierung einer vorgegebenen Anzahl der Strahler, z.B. nach 10, jeweils eine Korrekturpause eingelegt. Anhand der Fig. 7a bis 7d wird dies im folgenden erläutert.

In den Fig. 7a bis 7d sind verschiedene Pulsdiagramme für den Empfänger dargestellt. Die Fig. 7a zeigt das Pulsdiagramm für den Startimpuls SP. Beginnend mit dem Startimpuls SP werden nacheinander alle Strahler aktiviert. Fig. 7b zeigt den Nullimpuls NP, mit dem die Korrekturpause KOP erzielt wird. In Fig. 7c sind die Steuerpulse STP für die Strahler dargestellt. Nach dem ersten Startimpuls SP (Fig. 7a) werden nacheinander alle Strahler, z.B. 1 bis 10 aktiviert. Dann erfolgt die Korrekturpause KOP, während der kein Strahler aktiviert ist. Anschließend werden der Reihe nach die weiteren Strahler, beispielsweise 11 bis 20, der Reihe nach angekoppelt. In Fig. 7d ist das jeweils dazu gehörige Ausgangssignal des Videoverstärkers dargestellt.

Dieses Ausgangssignal VS des Videoverstärkers VV repräsentiert die jeweils empfangenen Signalechos der Strahler, die beispielsweise Bodenechos sein können, je nach Stärke und Phasenlage mit unterschiedlicher Amplitude und Polarität. Bei störungsfreiem System bringt jeder Betriebszyklus identische Meßergebnisse, vergleichbar mit den Festzeichenechos eines kohärenten Impulsradargerätes. Nähert sich ein Eindringlich E einem Streckenabschnitt, z.B. bei der Teilstrecke 7, wo der Strahler 7 den Überwachungsbereich ausleuchtet, so überlagert sich diesem "Festzeichenbild" eine zusätzliche Schwebung. Diese führt, wie in Fig. 7d ersichtlich, zu einer wesentlich größeren Amplitude E. In der Auswertung AWE (Fig. 6) wird dies als ein Eindringen ausgewertet und führt somit zu einer Alarmanzeige AWZ . Nach der Aktivierung des Strahlers 10 wird das empfangene Signal, also das Ausgangssignal VS des Videoverstärkers VV mit der Klemmschaltung KS (Fig. 6) auf Null gesetzt. Dieses geklemmte Referenzsignal ist in der Fig. 7d mit KOS bezeichnet. Dann werden der Reihe nach die weiteren Strahler aktiviert und wieder eine Korrekturpause eingelegt. Ist auf diese Weise der Reihe/nach ein Streckenabschnitt von beispielsweise 50 Strahlern aktiviert worden, so wird mit einem neuen Startimpuls dieser Zyklus wiederholt.

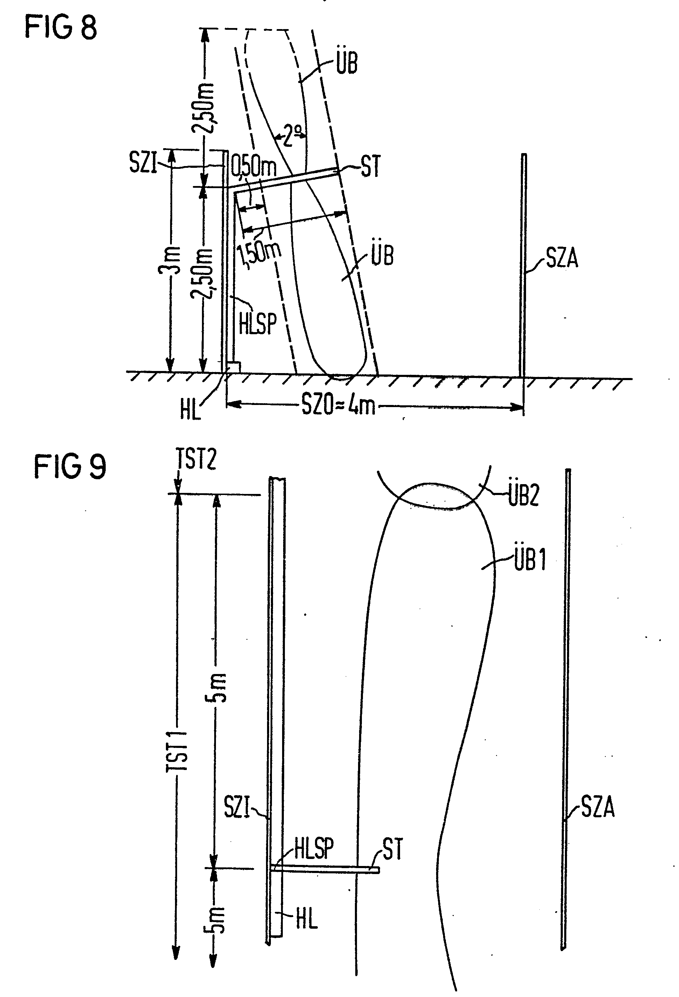

In Fig. 8 ist eine Anordnung des Hohlleiters und der Strahler am Schutzzaun in Seitenansicht dargestellt. Der Schutzzaun SZ besteht aus zwei Schutzzäunen, einem inneren Schutzzaun SZI, einem äußeren Schutzzaun SZA und einer dazwischen angeordneten sterilen Zone SZO. Am Boden des inneren Schutzzaunes SZI, auf der Seite der sterilen Zone SZO, ist der Hohlleiter HL verlegt.

An den Auskoppelstellen ist ein Speisehohlleiter HLSP zur Speisung der Strahler ST angeordnet. Der Strahler ST, der sich hier in 2,50m Höhe befindet, ist eine Stabantenne von ca. 1m Länge mit einer Bündelung von $2^o$ quer zur Stabrichtung. Die Antenne selbst ist in einem Abstand vom inneren Schutzzaun von etwa 50cm montiert und hier etwas schräg nach unten bzw. nach oben. Dadurch sollen mögliche Störungen durch den Schutzzaun ausgeschlossen werden. Der überwachte Raum ÜB befindet sich innerhalb der sterilen Zone SZO. Das Rundumdiagramm der Antenne ist der Bedeckung des zu überwachenden Raumes ÜB so angepaßt, daß sowohl senkrecht nach oben als auch senkrecht nach unten jeweils 2,50m überdeckt sind. In waagrechter Richtung sind jeweils 5m bis zum Nachbarstrahler ausgeleuchtet, wie aus Fig. 9 ersichtlich.

In Fig. 9 ist die Anordnung des Hohlleiters und des Strahlers am Schutzzaun in Draufsicht dargestellt. Entlang des inneren Schutzzaunes SZI verläuft der Hohlleiter HL. An einer Auskoppelstelle ist der Speisehohlleiter HLSP angeordnet. Der Strahler ST beleuchtet dabei in seiner Waagrechten jeweils 5m bis zum Nachbarstrahl, so daß der Überwachungsbereich ÜB voll erfaßt wird. Um die Antenne vor äußeren Witterungseinflüssen zu schützen, kann sie mit einer Plastikabdeckung versehen sein. Der äußere und der innere Schutzzaun (SZI und SZA) können eine Höhe von 3m und die sterile Zone eine Breite von 4m aufweisen.

Mit dieser Anordnung ist es möglich, die Schutzzaunanlagen nicht zu großflächig und nicht zu weitläufig anordnen zu müssen, weil die nachteilige Anordnung von sich überlappenden Streckenabschnitt bei Mikrowellenschranken mit Transmissionsstrecken entfällt. Das erfindungsgemäße Einbruchmeldesystem mit Hohlleitermikrowellenschranken wirkt sich dadurch besonders vorteilhaft an den Ecken von Schutzzäunen aus.

10 Patentansprüche
9 Figuren

## Patentansprüche

1. Mikrowellen-Einbruchmeldesystem für den Intrussions-schutz, d a d u r c h   g e k e n n z e i c h n e t , daß jeweils ein Streckenabschnitt (STA) einen Hohlleiter (HL) und daran angeschlossen einen Sender (SEN) und einen Empfänger (EMP) aufweist und daß an dem Hohlleiter (HL) in regelmäßigen Abständen über eine jeweilige Schaltvorrichtung (SV) eine Vielzahl von Strahlern (ST1 bis STn) angeschlossen ist, die zeitlich nacheinander an den Hohlleiter (HL) angekoppelt werden, wobei die vom jeweiligen Strahler (ST) ausgesandte Mikrowellenenergie eine zu überwachende (ÜB) Teilstrecke (TST) ausleuchtet und die teilweise reflektierte Mikrowellenenergie empfangen und im Empfänger (EMP) aus der Änderung des Reflexionssignals ein Alarmkriterium abgeleitet (AWE) wird.

2. Mikrowellen-Einbruchmeldesystem nach Anspruch 1, d a d u r c h   g e k e n n z e i c h n e t , daß der Ankopplungszyklus (STP) in bestimmten zeitlichen Abständen kurzzeitig unterbrochen (KOP) und bei nicht aktivierten Strahlern (ST) aus dem Empfangssignal ein Korrektursignal (KOS) gebildet (KS) wird.

3. Mikrowellen-Einbruchmeldesystem nach Anspruch 1oder 2, d a d u r c h   g e k e n n z e i c h n e t , daß an einem Ende der Hohlleiterstrecke (HL) der Sender (SEN) und am anderen Ende der Empfänger (EMP) angeordnet ist, wobei das Summensignal aus Speise- und reflektierter Strahlungsenergie empfangen und aus der Änderung des Summensignals ein Alarmkriterium (AWE) abgleitet wird.

4. Mikrowellen-Einbruchmeldesystem nach Anspruch 1 oder 2, d a d u r c h   g e k e n n z e i c h n e t , daß an einem Ende der Hohlleiterstrecke (HL) sowohl der Sender (SEN) als auch der Empfänger (EMP) über einen Zirkulator (ZIR) und am anderen Ende ein Hohlleiterabschluß (AS) angeordnet ist, wobei aus einem Teil des Sendesignals und aus dem reflektierten Signal ein Alarmkriterium (AWE) abgeleitet wird.

5. Mikrowellen-Einbruchmeldesystem nach Anspruch 1, d a d u r c h   g e k e n n z e i c h n e t , daß die Schaltvorrichtungen (SV) von verstimmbaren Resonanzkreisen gebildet sind die zyklisch angesteuert (STE) werden, wobei der Sender (SEN) eine konstante Frequenz erzeugt.

6. Mikrowellen-Einbruchmeldesystem nach Anspruch 1, d a d u r c h   g e k e n n z e i c h n e t , daß die Schaltvorrichtungen (SV) von festabgestimmten Resonanzkreisen gebildet sind, die jeweils zum vorhergehenden Resonanzkreis eine um eine bestimmte Kanalbreite veränderte Resonanzfrequenz aufweisen, wobei der Sender (W-SEN) eine entsprechen der Anzahl der angeschlossenen Resonanzkreise vorgegebene Frequenzbandbreite zyklisch durchläuft.

7. Mikrowellen-Einbruchmeldesystem nach Anspruch 1 oder 4, d a d u r c h   g e k e n n z e i c h n e t , daß in einem Streckenabschnitt (STA) zwei hintereinander angeordnete Hohlleiter (HL1 und HL2) mit einem dazwischengeschalteten Verstärker (VER) vorgesehen sind.

8. Mikrowellen-Einbruchmeldesystem nach einem der vorhergehenden Ansprüche, d a d u r c h   g e k e n n z e i c h n e t , daß der Empfänger (EMP) einen Signaldetektor (DET), der die Schwebung aus Sendesignal und reflektierten Nutzsignal auswertet, dem Signaldetektor (DET) nachgeschaltet einen Videoverstärker (VV), eine Taktsteuereinrichtung (STE), dieser und dem Videoverstärker (VV) nachgeordnet eine Klemmschaltung (KS) und eine an den Ausgang des Videoverstärkers (VV) angeschlossene Auswerteeinrichtung (AWE) zur Ableitung eines Alarmkriteriums aufweist.

9. Mikrowellen-Einbruchmeldesystem nach einem der vorhergehenden Ansprüche, d a d u r c h  g e k e n n - z e i c h n e t , daß der Hohlleiter (HL) entlang des zu überwachenden Areals (SZ) und senkrecht dazu an den Auskoppelstellen jeweils ein Hohlleiter (HLSP) zur Speisung des am freien Ende des Speisehohlleiters (HLSP) angebrachten Strahles (ST) angeordnet ist, wobei die Strahlungsbündelung dem Überwachungsbereich (ÜB) angepaßt ist.

10. Mikrowellen-Einbruchmeldesystem nach Anspruch 9, d a d u r c h  g e k e n n z e i c h n e t , daß der Hohlleiter (HL) am Boden entlang eines Schutzzaunes (SZ) und die Strahler (ST) etwa in Manneshöhe angeordnet sind, wobei die Strahlungsbündelung parallel zum Schutzzaun (SZ) nur wenige Grad beträgt und das Rundumdiagramm dem Überwachungsbereich (ÜB) der jeweiligen Teilstrecke (STS) angepaßt ist.

## FIG 1

## FIG 2

## FIG 3

## FIG 4

W-SEN

| 9-10 GHz |

HL

9,0 GHz    SV1    SV2    SV3 ---
           9,04GHz      9,04GHz

ST1    ST2    ST3

## FIG 5

f(GHz)

9,06
9,04
9,02
9,00

t

## FIG 6

SEN

| 1W |

HL

SV50    STL

ST50

| DET |  | VV |  | II |  | AWE | → AWZ

| STE |    KS

EMP

FIG 7a ................................................. SP

7b ................................................. NP

KOP

7c   |1|2|3|4|5|6|7|8|9|10|   |11|12|13|14|15|16|17|18|19|20|   |49|50|   |1|   STP

7d ................................................. VS

KOS

E

3/4

0109552

0109552

FIG 8

FIG 9

# EUROPÄISCHER RECHERCHENBERICHT

Europäisches
Patentamt

Nummer der Anmeldung

EP 83 11 0429

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 328 487 (J. CHEAL) * Figuren 1, 5; Spalte 4, Zeile 65 - Spalte 6, Zeile 35; Spalte 1, Zeilen 14-61 * | 1,3,10 | G 08 B 13/24 |
| A | | 9 | |
| A | EP-A-0 023 625 (DORNIER SYSTEM) * Seite 11, Absatz 1; Figur 3 * | 4 | |
| A | GB-A-1 424 351 (EMI) * Figur 1 mit zugehöriger Beschreibung * | 7 | |
| A | CA-A-1 014 245 (R.K. HARMAN) | | |
| A | US-A-3 890 615 (M.J. MORAN) * Figur 6 * | 1 | |
| A | DE-A-2 147 022 (LICENTIA PATENT-VERWALTUNGS-GMBH) * Seite 2, Absatz 3; Figur * | 2 | |
| A | DE-A-2 836 760 (A. RISTOW GMBH & CO.) | | |

**RECHERCHIERTE SACHGEBIETE (Int. Cl. ³)**

G 08 B
G 01 S

Der vorliegende Recherchenbericht wurde für alle Patentansprüche erstellt.

| Recherchenort BERLIN | Abschlußdatum der Recherche 30-01-1984 | Prüfer BEYER F |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82